# EUROPÄISCHE PATENTSCHRIFT

(11) **EP 0 578 129 B1**
(45) Veröffentlichungstag und Bekanntmachung des Hinweises auf die Patenterteilung: **11.11.1998**
(21) Anmeldenummer: 93110492.1
(22) Anmeldetag: 01.07.1993
(51) Int. Cl.: G01S 17/02, G01S 17/88

(54) **Bilderfassende Sensoreinheit**
Imaging sensor unit
Capteur formateur d'images

(30) Priorität: 10.07.1992 DE 4222642
(43) Veröffentlichungstag der Anmeldung: 12.01.1994
(73) Patentinhaber: Bodenseewerk Gerätetechnik GmbH, 88662 Überlingen (DE)
(72) Erfinder: Uwira, Bernd, Dr., D-7750 Konstanz (DE)
(74) Vertreter: Wolgast, Rudolf, Dr.

(56) Entgegenhaltungen:
- EP-A- 0 283 222
- DE-A- 2 037 583
- GB-A- 2 226 466
- US-A- 3 854 821
- US-A- 3 953 667
- US-A- 4 497 065
- PROCEEDINGS SEVENTH CONFERENCE ON ARTIFICIAL INTELLIGENCE APPLICATIONS, 28. Februar 1991, MIAMI, FA Seiten 190 - 196, XP298923 CHU ET AL. 'Multi-Sensor Image Interpretation Using Laser Radar and Thermal Images'
- PROCEEDINGS IEEE NAECON 1986, Bd.2, 23. Mai 1986, DAYTON, OH Seiten 550 - 559 KELSO ET AL. 'AFTI/F-16 SENSOR/TRACKER SYSTEM'

## Beschreibung

Die Erfindung betrifft eine bilderfassende Sensoreinheit, enthaltend
(a) einen passiven Sensor, der ein Gesichtsfeld in Bildelemente mit unterschiedlichen Helligkeiten zerlegt und dem bildverarbeitende Mittel nachgeschaltet sind,
(b) einen zusätzlichen, aktiven LADAR-Sensor mit einem Laser, der einen Abtaststrahl aussendet und aus der von Flächen im Gesichtsfeld reflektierten Strahlung Entfernungssignale erzeugt, und
(c) Abtastmittel zum Abtasten eines LADAR-Gesichtsfeldes mittels des Laserstrahls, welche von den dem passiven Sensor nachgeschalteten bildverarbeitenden Mitteln so steuerbar sind, daß die durch den LADAR-Sensor erfolgende Abtastung auf im Gesichtsfeld von dem passiven Sensor erfaßte Objekte beschränkt ist.
   Es sind bilderfassende Sensoren bekannt, bei denen die einzelnen Bildelemente eines beobachteten Gesichtsfeldes nacheinander mit Hilfe beweglicher optischer Glieder auf einen feststehenden Detektor abgebildet werden. Das Gesichtsfeld wird so Punkt für Punkt oder Zeile für Zeile abgetastet. Es sind auch Sensoren mit einer zweidimensionalen Anordnung von Detektorelementen bekannt. Solche Sensoren können beispielsweise von einer CCD-Matrix gebildet sein. Bei solchen Sensoren wird das Gesichtsfeld auf die Detektorelemente des Sensors abgebildet. Die Detektorelemente sprechen auf Strahlung an, die von den Objekten des Gesichtsfeldes ausgesandt oder reflektiert wird. Der Sensor selbst sendet, anders als beispielsweise bei RADAR, keine Strahlung aus. Man bezeichnet solche Sensoren als "passive", bilderfassende Sensoren.
   Solche passiven Sensoren liefern nur ein Hell-Dunkel-Muster, bei welchem jeder Beobachtungsrichtung ein Intensitätswert der aus dieser Richtung auf den Sensor fallenden Strahlung zugeordnet ist. Die passiven Sensoren liefern keine Tiefeninformation, also keine Informationen über die Entfernung oder die dreidimensionale Struktur eines erfaßten Objektes.
   Es ist weiterhin bekannt, einen passiven, bilderfassenden, optischen Sensor mit einem "aktiven" Sensor zu kombinieren, der im Millimeterwellenbereich arbeitet. Ein solcher Sensor liefert Entfernungsinformationen. Bei einem solchen im Millimeterwellenbereich arbeitenden Sensor kann jedoch nur eine im Vergleich zu einem optischen, bilderfassenden Sensor geringe Winkelauflösung erreicht werden. Dadurch ist eine geometrische Zuordnung der Informationen eines solchen Sensors zu den einzelnen Bildelementen nicht oder nur unzureichend möglich. Solche kombinierten Sensoreinheiten sind außerdem unerwünscht groß.
   Es sind weiterhin LADAR-Sensoren bekannt. Dabei bedeutet LADAR, in Anlehnung an RADAR, "Laser Detection and Ranging". Solche Sensoren enthalten einen Laser, der ein Laser-Lichtbündel aussendet. Das Laser-Lichtbündel fällt auf ein im Gesichtsfeld angeordnetes Objekt. Ein photoelektrischer Detektor erfaßt das von dem Objekt reflektierte Licht. Aus der Laufzeit des Lichtbündels zum Objekt und zurück kann die Entfernung des Objektes bestimmt werden.
   Durch die GB-A-2 226 466 ist ein zielsuchender Flugkörper mit einem Suchkopf bekannt. Der Suchkopf enthält einen passiven IR-Sensor und einen aktiven LADAR-Sensor mit einem Laser. Der IR-Sensor tastet ein Bereich eines Geländes nach zielcharakteristischer Infrarotstrahlung ab. Nach Erfassen eines vermutlichen Ziels durch den IR-Sensor werden die Zielkoordinaten ermittelt und gespeichert. Anschließend wird das vermutliche Ziel mittels schwenkbaren Spiegeln durch einen Laserstrahl des Lasers abgetastet. Der LADAR-Sensor empfängt die an dem vermutlichen Ziel reflektierte Laserstrahlung und erzeugt Entfernungssignale. In einem Rechner werden die Entfernungssignale ausgewertet und mit vorgegebenen Mustern von echten Ziele verglichen.
   In einer Veröffentlichung von Chen-Chau Chu et.al. "Multi-Sensor Image Interpretation Using Laser Radar and Thermal Images" in "Proceedings, The Seventh Conference on Artificial Intelligence Applications", Miami Beach, Florida, 24-28 Februar 1991, Seiten 190-196 ist ein automatisches Interpretationssystem bei Verwendung von mehreren Sensoren ("AIMS = Automatic Interpretation system using Multiple Sensors") beschrieben, bei welchem LADAR-Sensor-Signale und IR-Sensor-Signale interpretiert werden. Mit diesem Interpretationssystem sollen Ziele in Kilometerentfernung entdeckt und erkannt werden. Dabei weden verschiedene charakteristische Eigenschaften, wie Entfernung, reflektierte Intensität, Geschwindigkeit und IR-Strahlung erfaßt.
   Die US-A-4 497 065 beschreibt ein passives elektro-optisches Zielerkennungssystem. Vermutliche Ziele werden von passiven IR-Sensoren erfaßt. Um verschiedene Ziele besser voneinander unterscheiden zu können, werden die vermutlichen Ziele zusätzlich von einem Laserstrahl beaufschlagt. Durch einen aktiven Sensor wird die reflektierte Laserstrahlung detektiert. Dabei wird entweder die Intensität oder die Polarisation der reflektierten Laserstrahlung ausgewertet. Die IR-Strahlung und die Laserstrahlung wird von einem gemeinsamen optischen System empfangen.
   Durch die US-A-3 854 821 ist ein optisches System für zielsuchende Flugkörper bekannt. Das optische System empfängt elektromagnetische Strahlung im sichtbaren Bereich und im Infrarotbereich. Durch eine bewegliche Linse wird das Gesichtsfeld abgetastet und ein Bild des Gesichtsfeldes in einer Bildebene erzeugt. Über ein Spiegelsystem wird dieses Bild auf einen Strahlenteiler geleitet, welche die Strahlung spektral zerlegt, so daß das sichtbare Licht von einem Sensor für sichtbares Licht und die IR-Strahlung von einem IR-Sensor detektiert wird. In einer Weiterbildung enthält das optische System ein Abstandsmeßsystem. Das Abstandsmeßsystem besteht aus einem Laser, mehreren Umlenkspiegel und einem Laser-Sensor. Die Ablenkung des Laserstrahls wird mit der Bewegung der Linse synchronisiert.
   Durch die DE-A-20 37 583 ist ein optisches Ortungsgerät mit einem Fernrohr bekannt. Das Fernrohr besitzt ein Gehäuse mit einer einzigen Einfallsöffnung zum Empfang eines zwei Strahlungsarten umfassenden Strahls. In dem Gehäuse befinden sich Mittel zur Zerlegung des Strahls in Abhängigkeit von der Strahlungsart. Die verschiedene Strahlungsarten treten dann aus dem Gehäuse durch voneinander getrennten Ausgängen aus.
   Durch die EP-A-0 283 222 ist ein optisches Abtastsystem zur Erzeugung von Bildern mit hoher Auflösung bekannt. Dabei wird linear polarisiertes Laserlicht von einem Polarisationsstrahlenteiler in zwei Teilstrahlen aufgeteilt, wobei ein Referenzstrahl auf einen Photodetektor und ein Zielstrahl auf ein Ziel geleitet wird. Durch mehrere Lambdaviertelplatten wird die Polarisation des Zielstrahls und des von Ziel reflektierten Strahls so verändert, daß der vom Ziel reflektierte Strahl die gleiche Polaristationsrichtung wie der Referenzstrahl hat. Der vom Ziel reflektierte Strahl wird dann durch den Polarisationsstrahlenteiler auf den Photodetektor geleitet, wobei ein Interferenzmuster entsteht, aus welchem Informationen über die Eigenschaften des Ziels gewonnen werden.
   Der Erfindung liegt die Aufgabe zugrunde, eine Sensoreinheit zu schaffen, die eine gegenüber dem Stand der Technik verbesserte Erkennung von Objekten in einem beobachteten Gesichtsfeld gestattet.
   Erfindungsgemäß wird die angegebene Aufgabe bei einer Sensoreinheit der eingangs genannten Art dadurch gelöst, daß
(d) die Abtastmittel des LADAR-Sensors so steuerbar sind, daß
   - in einem ersten Abtastzyklus eine Abtastung der von dem passiven Sensor erfaßten Objekte längs einer die Objekte nur einmal überstreichenden Bahn erfolgt und
   - in einem zweiten Abtastzyklus eine flächenhafte Abtastung in begrenzten, jeweils ein Objekt enthaltenden Flächenbereichen über die gesamte Fläche jedes Objekts hinweg erfolgt, und
(e) aus den Ergebnissen des ersten Abtastzyklus eine Auswahl aus den von dem passiven Sensor erfaßten Objekten nach vorgegebenen Kriterien getroffen wird, wobei im zweiten Abtastzyklus nur die so ausgewählten Objekte der flächenhaften Abtastung unterworfen werden.

Die Erfindung sieht also vor, einen bilderfassenden, optischen Sensor mit einem LADAR-Sensor zu kombinieren. Durch die zusätzliche Verwendung des LADAR-Sensors kann zusätzlich zu der zweidimensionalen Struktur von Objekten auch deren Entfernung bestimmt werden. Daraus können Informationen über die absolute Größe eines erfaßten Objektes gewonnen werden. Es ist auch möglich, bei einer Abtastung des Gesichtsfeldes mit einem Laser-Lichtbündel Informationen über die dreidimensionale Struktur des Objektes zu gewinnen, also eine Art Relief. Die Abtastung mittels eines Laser-Lichtbündels gestattet eine hinreichend feine Auflösung, im Gegensatz zu Sensoren, die mit Millimeterwellen arbeiten.

Der LADAR-Sensor kann entweder als FMCW-LADAR oder als Puls-LADAR arbeiten.

Wenn mittels des LADAR-Sensors das Gesichtsfeld mit gleicher Auflösung, z.B. in einer 512x512-Bildmatrix, und mit der gleichen Bildfrequenz von beispielsweise 25 Hz abgetastet wird wie mit dem passiven, optischen Sensor, dann ergibt sich eine sehr hohe Abtastfrequenz von beispielsweise 6,5 MHz. Eine solche Abtastfrequenz ist mit LADAR-Sensoren schwer zu verwirklichen. Daher sind Abtastmittel zum Abtasten eines LADAR-Gesichtsfeldes mittels des Laserstrahls vorgesehen, welche von den dem passiven Sensor nachgeschalteten bildverarbeitenden Mitteln gesteuert sind. Die Abtastmittel des LADAR-Sensors sind so steuerbar sind, daß die durch den LADAR-Sensor erfolgende Abtastung auf im Gesichtsfeld von dem passiven Sensor erfaßte Objekte beschränkt ist. Dabei können die bildverarbeitenden Mittel zur Segmentation von Objekten im Gesichtsfeld eingerichtet sein und die Steuerung der Abtastmittel des LADAR-Sensors kann so erfolgen, daß dieser nur solche segmentierten Objekte abtastet.

Bei einer solchen Steuerung des LADAR-Sensors braucht der Sensor nicht das gesamte Gesichtsfeld mit der Bildfrequenz von z.B. 25 Hz abzutasten. Dieses Gesichtsfeld enthält u.U. nur in einem kleinen Bereich ein zu identifizierendes Objekt. Der Rest des Gesichtsfeldes ist nicht interessierender Hintergrund. Durch den passiven Sensor und die zugehörige Bildverarbeitung wird daher zunächst eine Auswahl getroffen, welcher Teilbereich des Gesichtsfeldes für eine Abtastung mit dem LADAR-Sensor infrage kommt. Ein solcher Teilbereich bildet beispielsweise eine Bildmatrix von 16x16. Für die Abtastung eines solchen begrenzten Teilbereichs mit der Bildfrequenz von 25 Hertz reichen wesentlich geringere Abtastfrequenzen in der Größenordnung von 10 kHz aus. Solche Abtastfrequenzen sind bequem beherrschbar.

Eine raumsparende Ausbildung der Sensoreinheit ergibt sich dadurch, daß für den LADAR-Sensor und den passiven Sensor eine gemeinsame Abbildungsoptik vorgesehen sind, wobei zur Trennung der den passiven Sensor beaufschlagenden Strahlen und der rücklaufenden Strahlen des LADAR-Sensors ein Strahlenteiler vorgesehen ist.

Ein Ausführungsbeispiel der Erfindung ist nachstehend unter Bezugnahme auf die zugehörigen Zeichnungen näher erläutert.
- Fig. 1: zeigt den Aufbau einer Sensoreinheit mit einem passiven, bilderfassenden, optischen Sensor und einem LADAR-Sensor, die mit einer gemeinsamen Abbildungsoptik arbeiten und bei welcher der LADAR-Sensor von der Bildverarbeitung des passiven Sensors gesteuert ist.
- Fig.2: ist eine schematische Darstellung einer anderen Ausführung der Sensoreinheit und ein Blockdiagramm, das schematisch die verschiedenen Funktionen der Sensoreinheit veranschaulicht.
- Fig.3: zeigt die Abtastung des Gesichtsfeldes durch den Abtaststrahl des LADAR-Sensors in einem ersten, von den Signalen des passiven Sensors gesteuerten Abtastzyklus.
- Fig.4: zeigt die Abtastung des Gesichtsfeldes durch den Abtaststrahl des LADAR-Sensors in einem zweiten, von den Signalen des passiven Sensors gesteuerten Abtastzyklus.
- Fig. 5: ist eine schematische Darstellung und zeigt übereinander die Informationen, die über ein Objekt mit dem passiven Sensor und im ersten und zweiten Abtastzyklus mit dem LADAR-Sensor erhalten wird.
- Fig.6: zeigt den Ablauf des ersten und des zweiten Abtastzyklus des LADAR-Sensors.

Mit 10 ist eine Struktur bezeichnet, auf welcher die Sensoreinheit aufgebaut ist. Die Struktur 10 weist einen Flansch auf. An dem Flansch ist ein optisches System 14 montiert. Das optische System 14 ist gemeinsam für den passiven, bilderfassenden, optischen Sensor und für den LADAR-Sensor und bildet eine gemeinsame Apertur für beide Sensoren.

Ein wellenlängenabhängiger Strahlenteiler 16 trennt die Strahlengänge des passiven, bilderfassenden, optischen Sensors und des LADAR-Sensors. Der Strahlengang des passiven Sensors wird von dem Strahlenteiler 16 reflektiert und über einen Umlenkspiegel 18 und ein weiteres optisches Glied 20 auf einen Detektor 22 geleitet. Der Detektor 22 ist ein CCD-Detektor (Charge Coupled Device) mit einer zweidimensionalen Anordnung von Detektorelementen, die eine 512x512-Matrix bilden. Der Detektor kann aber stattdessen auch ein Zeilendetektor mit einer eindimensionalen Anordnung von Detektorelementen sein. In diesem Fall ist der Umlenkspiegel 18 als Schwingspiegel ausgebildet, der eine Abtastung des Gesichtsfeldes Zeile für Zeile bewirkt.

Der Strahlengang des LADAR-Sensors tritt durch den wellenlängenselektiven Strahlenteiler 16 hindurch. Der Strahlengang verläuft über ein LADAR-Bildabtastsystem 30. Das LADAR-Bildabtastsystem enthält einen Spiegel 68, der gesteuert in zwei zueinander senkrechten Richtungen um definierte Winkel auslenkbar ist. Der Strahlengang verläuft dann -auf dem rücklaufenden Weg- durch eine Lambdaviertelplatte 32, über einen Umlenkspiegel 34 und durch einen Polarisationsstrahlenteiler 36 hindurch. Das durch den Polarisationsstrahlenteiler 36 hindurchtretende Lichtbündel wird durch ein optisches Glied 38 auf einem Laser-Detektor 40 gesammelt.

Ein aus dem Laser 50 ausgekoppeltes Laser-Lichtbündel ist linear polarisiert. Dieses Laser-Lichtbündel wird über einen Umlenkspiegel 52 geleitet. Das Laser-Lichtbündel wird dann durch eine Optik 54 aufgeweitet. Ein Umlenkspiegel 56 lenkt dann das Laser-Lichtbündel in Richtung auf den Polarisationsstrahlenteiler 36. Das linear polarisierte Laser-Lichtbündel fällt unter dem Brewster-Winkel auf den Polarisationsstrahlenteiler 36. Dadurch wird das vorlaufende Laser-Lichtbündel verlustarm in den Strahlengang eingekoppelt.

Nach dem Durchgang durch die Lambdaviertelplatte 32 ist das vorlaufende Laser-Lichtbündel zirkular polarisiert. Das Laser-Lichtbündel wird durch das LADAR-Bildabtastsystem 30 abgelenkt und tritt durch den wellenlängenselektiven Strahlenteiler 16 hindurch durch das optische System 14 aus. Das von einem Objekt reflektierte, rücklaufende Laser-Lichtbündel ist ebenfalls zirkular polarisiert. Das rücklaufende Laser-Lichtbündel läuft den gleichen Weg zurück durch das optische System 14 hindurch, über das LADAR-Bildabtastsystem 30, durch den wellenlängenselektiven Strahlenteiler 16 und die Lambdaviertelplatte 32. Nach Durchgang durch die Lambdaviertelplatte 32 ist das Laser-Lichtbündel wieder linear polarisiert. Die Polarisationsebene des rücklaufenden Laser-Lichtbündels ist jedoch gegenüber der Polarisationsebene des vorlaufenden Laser-Lichtbündels um 90° gedreht. Für das so polarisierte Laser-Lichtbündel weist der Polarisationsstrahlenteiler 36 eine hohe Transmission auf. Dadurch kann das rücklaufende Laser-Lichtbündel verlustarm durch den Polarisationsstrahlenteiler 36 hindurch auf den Laser-Detektor 40 gelangen.

Die Bilddaten von dem Detektor 22 des passiven Sensors sind auf eine Bildverarbeitungs-Einrichtung geschaltet. Die Bildverarbeitungs-Einrichtung 60 segmentiert einzelne Objekte oder wählt einzelne interessierende Objekte im Gesichtsfeld aus. Die Bildverarbeitungs-Einrichtung steuert nun das LADAR-Bildabtastsystem 30 so, daß es einen Teilbereich des Gesichtsfeldes abtastet, welcher ein solches interessierendes Objekt enthält. Ein solcher Teilbereich kann beispielsweise 16x16 Bildelemente oder Pixel umfassen. Ein solcher Teilbereich ist wesentlich kleiner als das gesamte Gesichtsfeld. Er kann daher mit einer wesentlich geringeren Abtastfrequenz von z.B. 10 kHZ abgetastet werden als sie zur Abtastung des gesamten Gesichtsfeldes mit der gleichen Bildfrequenz erforderlich wäre.

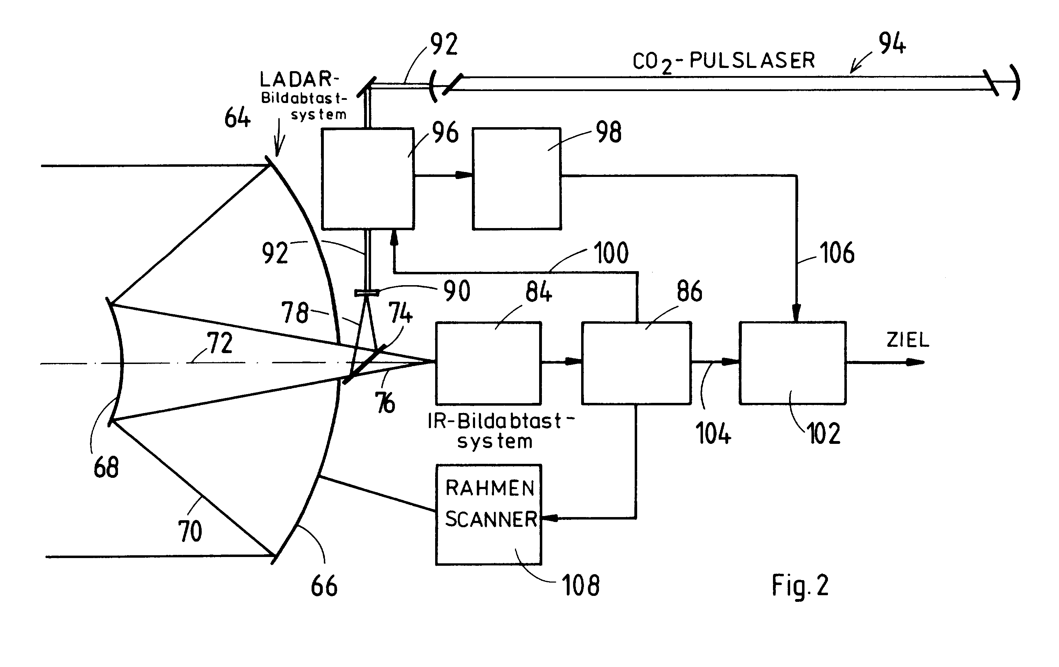

In Fig.2 ist schematisch der Aufbau einer abgewandelten Sensoreinheit dargestellt wobei die verschiedenen Funktionen in Form eines Blockdiagramms dargestellt sind.

Die Sensoreinheit von Fig.2 enthält ebenfalls ein für den passiven Sensor und für den LADAR-Sensor gemeinsames optisches System 64. Das optische System 64 enthält bei der Ausführung nach Fig.2 einen ringförmigen Hohlspiegel 66, der dem beobachteten Gesichtsfeld zugewandt ist, und einen konvexen Sekundärspiegel 68. Der Sekundärspiegel 68 ist dem Hohlspiegel 66 zugewandt und empfängt das von dem Hohlspiegel 66 fokussierte Lichtbündel 70. Der Sekundärspiegel 68 wirft dieses Lichtbündel 70 längs der optischen Achse 72 des Hohlspiegels 66 durch eine zentrale Öffnung des Hohlspiegels 66 zurück. In dem konvergenten Teil des Strahlenganges hinter dieser zentralen Öffnung ist ein teildurchlässiger Spiegel 74 unter 45° zur optischen Achse 72 geneigt angeordnet. Der Strahlengang wird durch den teildurchlässigen Spiegel 74 in einen Strahlengang 76 des passiven Sensors und einen Strahlengang 78 des LADAR-Sensors aufgespalten.

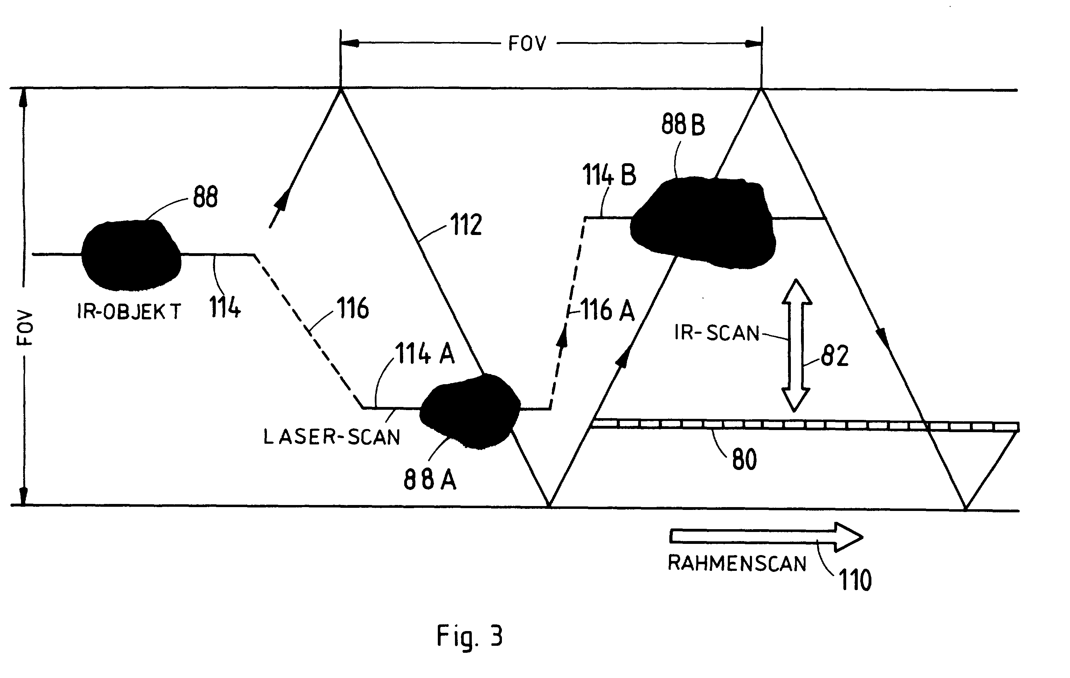

Bei der Ausführung von Fig.2 weist der passive Sensor einen Reihendetektor auf, der über einen Schwingspiegel ein Gesichtsfeld zweidimensional abtastet. Der Reihendetektor 80 besteht aus einer linearen Anordnung von infrarotempfindlichen Detektorelementen. In Fig.3 ist der Reihendetektor in der Bildebene des abbildenden optischen Systems 64 mit 80 bezeichnet. Die Abtastung des Gesichtsfeldes über einen Schwingspiegel ist durch einen Doppelpfeil 82 in Fig.3 symbolisiert. Der Reihendetektor 80 mit dem Schwingspiegel ist in Fig.2 generell als IR-Bildabtastsystem 84 dargestellt.

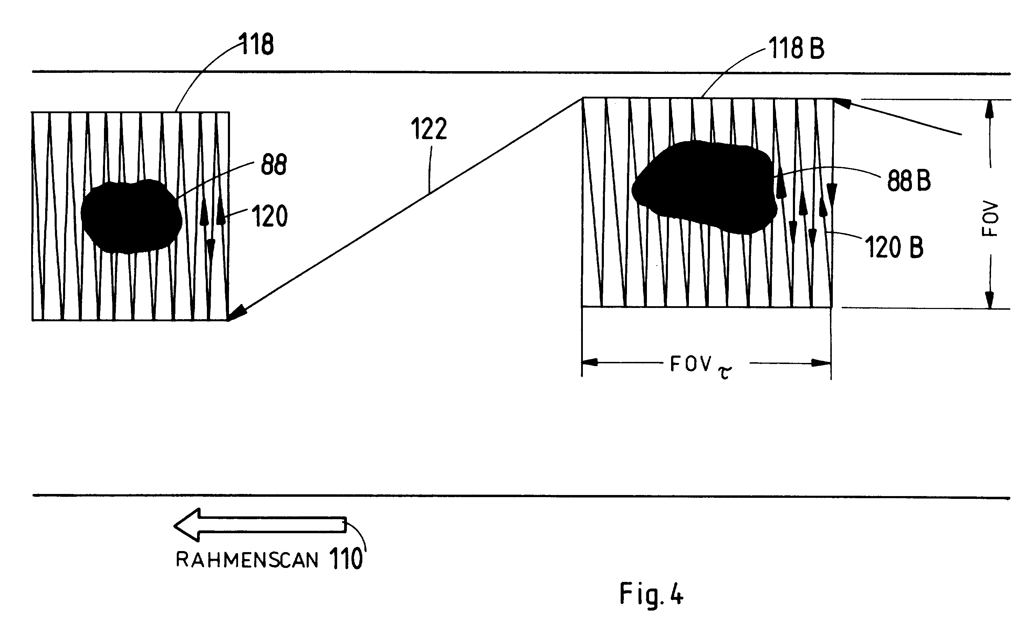

Das IR-Bildabtastsystem 84 des passiven Sensors liefert ein zweidimensionales Bild des Gesichtsfeldes, das durch eine Bildverarbeitungs-Einrichtung 86 verarbeitet wird. Die Bildverarbeitungs-Einrichtung 86 enthält Segmentierungsmittel zur Segmentation der einzelnen im Gesichtsfeld beobachteten Objekte. Solche Objekte sind in Fig.3 und 4 dargestellt und mit 88 bezeichnet.

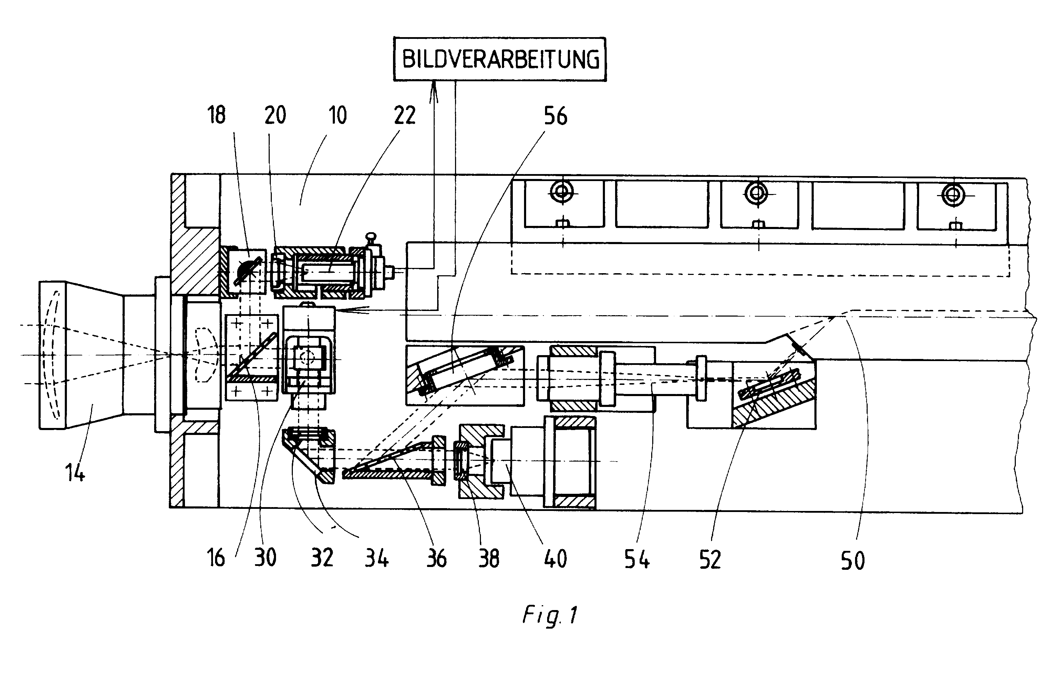

Der Strahlengang 78 des LADAR-Sensors enthält eine Zerstreuungslinse 90. Die Zerstreuungslinse 90 macht das vorlaufende, parallele Laser-Lichtbündel 92 des LADAR-Sensors divergent und richtet das rücklaufende Laser-Lichtbündel wieder parallel. Das Laser-Lichtbündel 92 wird von einem als CO₂-Pulslaser ausgebildeten Laser 94 erzeugt. Das von dem Laser 94 erzeugte Laser-Lichtbündel 92 ist durch ein LADAR-Bildabtastsystem 96 in zwei Dimensionen ablenkbar, so daß eine Fläche abtastbar ist, wie in Fig.4 angedeutet ist. Das LADAR-Bildabtastsystem 96 kann einen um zwei Achsen auslenkbaren Spiegel enthalten ähnlich dem Spiegel des LADAR-Bildabtastsystems 30 von Fig.1. Das LADAR-Bildabtastsystem 96 liefert Signale an eine LADAR-Signalverarbeitung 98. Die LADAR-Signalverarbeitung 98 liefert Entfernungs-Informationen, wobei jede Entfernungs-Information einem bestimmten Punkt im Gesichtsfeld des LADAR-Bildabtastsystems 96 zugeordnet ist.

Das LADAR-Bildabtastsystem 96 ist von der Signalverarbeitungs-Einrichtung 86 des passiven Sensors gesteuert. Praktisch wird die Auslenkung des Spiegels des LADAR-Bildabtastsystems 96 vorgegeben. Das ist in Fig.2 durch die Verbindung 100 dargestellt. Die Steuerung des LADAR-Bildabtastsystems 96 wird unten unter Bezugnahme auf Fig.3 bis 6 beschrieben.

Die Bild-Informationen von der Bildverarbeitungs-Einrichtung 86 und die Entfernungs-Informationen von der LADAR-Signalverarbeitung 98 sind auf eine weitere Signalverarbeitung 102 aufgeschaltet. Das ist in Fig.2 durch die Verbindungen 104 bzw. 106 dargestellt. Die Signalverarbeitung 102 ermittelt eine dreidimensionale Darstellung eines erfaßten Objekts 88. Aus dieser dreidimensionalen Darstellung stellt die Signalverarbeitung 102 fest, welches der Objekte 88 als "Ziel" angesehen werden soll. Auf ein solches Ziel kann beispielsweise ein Flugkörper gelenkt werden.

Über eine Rahmen-Abtasteinrichtung 108 erfolgt eine überlagerte Abtastung eines größeren Gesichtsfeldes durch Verschwenkung der gesamten Sensoreinheit von Fig.2 in einem (nicht dargestellten) Kardanrahmen. Das ist in Fig.3 durch einen Pfeil 110 angedeutet.

Die Abtastung des Gesichtsfeldes durch den passiven Sensor, d.h. den Reihendetektor 80, ist aus Fig.3 am besten ersichtlich. Der Reihendetektor 80 tastet das Gesichtsfeld quer zu seiner Ausdehnung ab, wie durch den Doppelpfeil 82 angedeutet ist. Dieser Abtastbewegung ist eine Abtastung des Gesichtsfeldes in Richtung der Ausdehnung des Reihendetektors 80 überlagert, die durch die Rahmen-Abtasteinrichtung 108 bewirkt wird und in Fig.3 durch den Pfeil 110 angedeutet ist. Dementsprechend erfolgt eine Abtastung des Gesichtsfeldes längs einer Zickzack-Bahn 112. Die Abtastbewegung durch den Schwingspiegel gemäß Doppelpfeil 82 und die Rahmen-Abtastbewegung gemäß Pfeil 110 sind so aufeinander abgestimmt, daß -in der Bildebene- während einer Periode der durch den Doppelpfeil 82 dargestellten hin- und hergehenden Abtastbewegung die durch Pfeil 110 dargestellte Rahmen-Abtastbewegung etwa um die Länge des Reihendetektors 80 fortgeschritten ist.

Die Abtastbewegung des LADAR-Bildabtastsystems 96 ist beschränkt auf diejenigen Bereiche des Gesichtsfeldes, in denen der passive Sensor überhaupt Objekte 88 festgestellt hat. Außerdem erfolgt die Abtastung in zwei Abtastzyklen. Ein erster Abtastzyklus soll dazu dienen, von den durch den passiven Sensor erfaßten Objekten 88 diejenigen Objekte auszusondern, die von vornherein nicht als mögliche Ziele in Frage kommen. Das können beispielsweise Objekte sein, die keine dreidimensionale Struktur zeigen.

Im ersten Abtastzyklus werden die Objekte 88 durch das LADAR-Bildabtastsystem 96 längs einer quer über das Objekt 88 verlaufenden, geraden Bahn 114 abgetastet. Von der Bahn 114 eines ersten Objekts 88 springt das LADAR-Bildabtastsystem 96 längs der gestrichelt eingezeichneten Bahn 116 zum Bereich des nächsten Objekts 88A. Das Objekt 88A wird dann wieder längs der quer über das Objekt 88A verlaufenden, geraden Bahn 114A abgetastet. Von dem Bereich des Objekts 88A springt das LADAR-Bildabtastsystem 96 längs der gestrichelt eingezeichneten Bahn 116A zu dem Bereich des Objektes 88B. Das Objekt 88B wird längs der quer über das Objekt 88B verlaufenden, geraden Bahn 114B abgetastet.

Durch diese relativ schnell erfolgende "lineare" Abtastung aller erfaßten Objekte können einzelne Objekte, z.B. Objekt 88A von vornherein als mögliches Ziel ausgeschlossen werden. Eine vollständige Abtastung mittels des LADAR-Bildabtastsystems 96 braucht dann in einem zweiten Abtastzyklus nur noch mit den verbleibenden Objekten 88 und 88B vorgenommen zu werden. Das ist in Fig.4 dargestellt. Die vollständige Abtastung der Objekte 88B und 88 erfolgt in einem zweiten Abtastzyklus während des Rücklaufs der Rahmen-Abtastbewegung. Dabei wird jedesmal nur ein begrenzter, das betreffende Objekt enthaltender Bereich 118B bzw.118 längs einer Zickzackbahn 120B bzw. 120 abgetastet. Zwischen diesen Zickzackbahnen 120B und 120 springt das LADAR-Bildabtastsystem 96 längs einer Bahn 122 von dem Bereich 118B zum Bereich 118. Das Objekt 88A wird ausgespart.

Der LADAR-Sensor arbeitet langsamer als der passive Sensor. Durch die Begrenzung der durch den LADAR-Sensor abgetasteten Bereiche und die Auswahl aus den von dem passiven Sensor erfaßten Objekten kann trotzdem die Information des LADAR-Sensors gleichzeitig mit der Information des passiven Sensors zur Verfügung gestellt werden. Die Signalverarbeitung 102 erzeugt eine dreidimensionale Darstellung des Objekts.

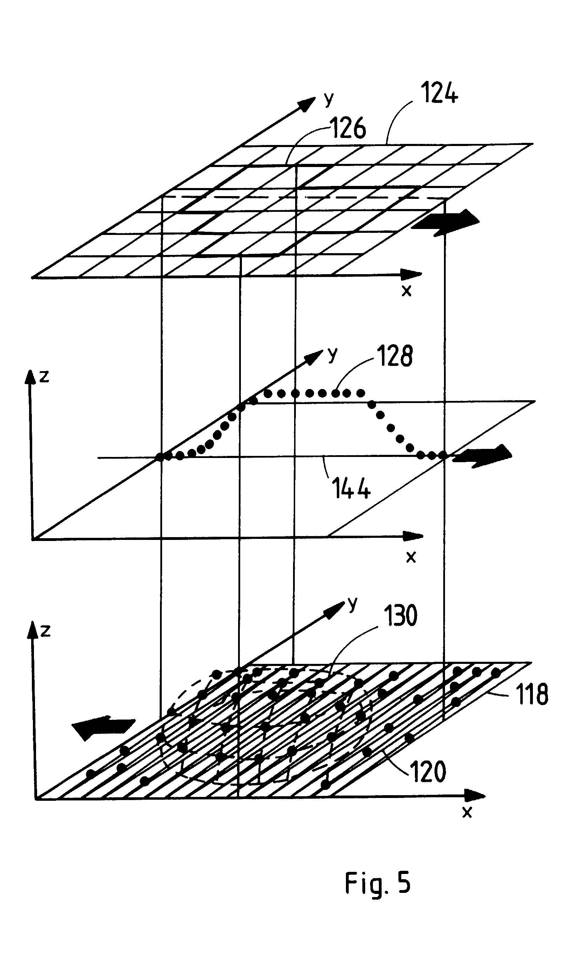

In Fig.5 sind die verschiedenen Informationen über das Objekt, z.B. Objekt 88, schematisch dargestellt.

Im oberen Teil von Fig.5 ist eine Pixelmatrix 124 dargestellt, in welcher das Gesichtsfeld des passiven Sensors in ein Raster von Bildelementen (Pixeln) unterteilt ist. Ein Objekt 88 erscheint darin als ein zweidimensionales Gebilde 126.

Nach der Abtastung des Objekts 88 in dem ersten Abtastzyklus gemäß Fig.3 liegt eine Information über den Abstand der einzelnen Teile des Objekts 88 längs der geraden, eindimensionalen Bahn 114 vor. Das ergibt ein in einer Ebene verlaufendes Profil 128, wie es im mittleren Teil von Fig.5 dargestellt ist. Damit ist Objekt 88 als mögliches Ziel qualifiziert.

Es erfolgt dann die zweidimensionale Abtastung gemäß Fig.4. Diese liefert eine vollständige dreidimensionale Darstellung 130 der Oberfläche des Objekts 88. Aus dieser Darstellung kann dann z.B. ein bestimmter Typ von Objekt als Ziel ausgewählt werden.

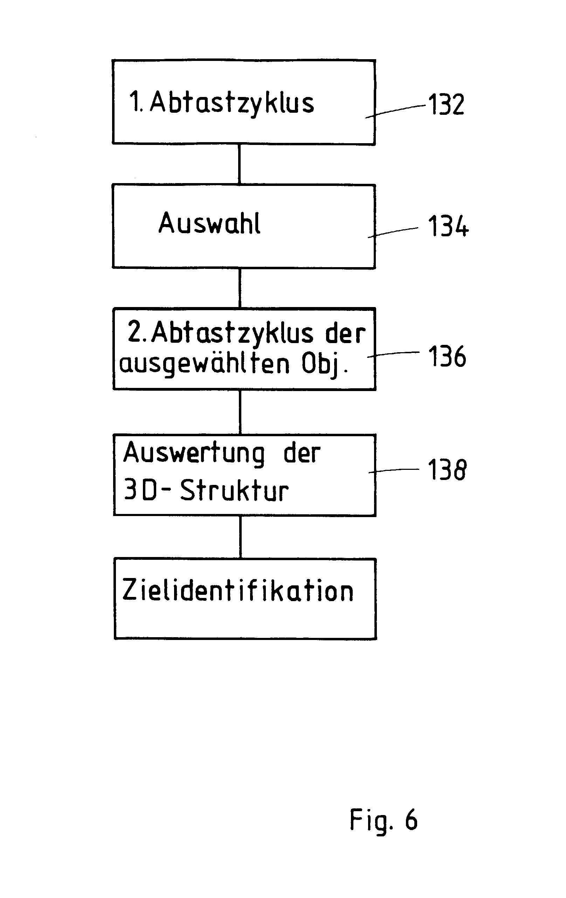

Fig.6 veranschaulicht den Ablauf der Abtastung mittels des LADAR-Sensors.

Zunächst erfolgt der erste Abtastzyklus gemäß Fig.3. Das ist durch Rechteck 132 dargestellt. Aufgrund des 6 ersten Abtastzyklus erfolgt eine Auswahl. Das ist in Fig.6 durch Rechteck 134 dargestellt. Der zweite Abtastzyklus gemäß Fig.4 wird nur auf die ausgewählten Objekte angewandt. Dieser zweite Abtastzyklus ist durch Rechteck 136 dargestellt. Durch die Signalverarbeitung 102 erfolgt eine Auswertung zur Bestimmung der dreidimensionalen Struktur des Objekts. Das ist durch Rechteck 138 dargestellt. Schließlich wird anhand der so bestimmten Struktur ein Ziel identifiziert. Das ist durch ein Rechteck dargestellt.

Es kann auch sein, daß eine Abtastung gar nicht erforderlich ist sondern nur die Entfernung des Objektes bestimmt zu werden braucht. Diese Entfernung würde z.B. in Verbindung mit dem Bild am Detektor 22 eine Aussage über die absolute Größe des Objektes gestatten.

## Patentansprüche

1. Bilderfassende Sensoreinheit, enthaltend
(a) einen passiven Sensor (22), der ein Gesichtsfeld in Bildelemente mit unterschiedlichen Helligkeiten zerlegt und dem bildverarbeitende Mittel nachgeschaltet sind,
(b) einen zusätzlichen, aktiven LADAR-Sensor (40) mit einem Laser (50), der einen Abtaststrahl aussendet und aus der von Flächen im Gesichtsfeld reflektierten Strahlung Entfernungssignale erzeugt, und
(c) Abtastmittel (30) zum Abtasten eines LADAR-Gesichtsfeldes mittels des Laserstrahls, welche von den dem passiven Sensor nachgeschalteten bildverarbeitenden Mitteln so steuerbar sind, daß die durch den LADAR-Sensor erfolgende Abtastung auf im Gesichtsfeld von dem passiven Sensor erfaßte Objekte (88) beschränkt ist,
**dadurch gekennzeichnet, daß**
(d) die Abtastmittel des LADAR-Sensors so steuerbar sind, daß
- in einem ersten Abtastzyklus eine Abtastung der von dem passiven Sensor erfaßten Objekte (88,88A,88B) längs einer die Objekte nur einmal überstreichenden Bahn (114,114A,114B) erfolgt und
- in einem zweiten Abtastzyklus eine flächenhafte Abtastung in begrenzten, jeweils ein Objekt (88,88B) enthaltenden Flächenbereichen (118,118B) über die gesamte Fläche jedes Objekts (88,88B) hinweg erfolgt, und
(e) aus den Ergebnissen des ersten Abtastzyklus eine Auswahl aus den von dem passiven Sensor erfaßten Objekten (88,88B) nach vorgegebenen Kriterien getroffen wird, wobei im zweiten Abtastzyklus nur die so ausgewählten Objekte der flächenhaften Abtastung unterworfen werden.

2. Bilderfassende Sensoreinheit nach Anspruch 1, **dadurch gekennzeichnet,** daß die bildverarbeitenden Mittel Segmentierungsmittel zur Segmentation von Objekten im Gesichtsfeld eingerichtet sind und die Steuerung der Abtastmittel des LADAR-Sensors so erfolgt, daß dieser nur solche segmentierten Objekte abtastet.

3. Bilderfassende Sensoreinheit nach Anspruch 1 oder 2, **dadurch gekennzeichnet**, daß für den LADAR-Sensor und den passiven Sensor eine gemeinsame Abbildungsoptik (14) vorgesehen ist, wobei zur Trennung der den passiven Sensor beaufschlagenden Strahlen und der rücklaufenden Strahlen des LADAR-Sensors ein Strahlenteiler (16) vorgesehen ist.

4. Bilderfassende Sensoreinheit nach Anspruch 3, **dadurch gekennzeichnet,** daß der Strahlenteiler (16) ein wellenlängenselektiver Strahlenteiler ist.

5. Bilderfassende Sensoreinheit nach Anspruch 4, **dadurch gekennzeichnet, d**aß die Abtastmittel (30) zur Erzeugung einer Abtastbewegung des Laser-Lichtbündels des LADAR-Sensors in dem Strahlengang laserseitig von dem Strahlenteiler (16) angeordnet sind.

6. Bilderfassende Sensoreinheit nach Anspruch 5, **dadurch gekennzeichnet,** daß in dem Strahlengang laserseitig von dem Bildabtastsystem (30) eine Lambdaviertelplatte (32) und ein Polarisationsstrahlenteiler (36) vorgesehen sind, über welchen das vorlaufende Laser-Lichtbündel von dem Laser in den Strahlengang ein- und das rücklaufende Laserlichtbündel verlustarm zu einem Detektor (40) aus dem Strahlengang auskoppelbar ist.

## Claims

1. An image detecting sensor unit comprising
(a) a passive sensor (22) which separates a field of view into image elements with different luminosities and are applied to the image processing means,
(b) an additional active LADAR sensor (40) with a laser (50) which emits a scanning beam and generates range signals from the reflected radiation from surfaces in the field of view and
(c) scanning means (30) for the scanning of a LADAR field of view by means of the laser beam which scanning means are controllable by the image processing means which are applied to the passive sensor such that the scanning effected by the LADAR sensor is limited to the objects (88)detected in the field of view by the passive sensor.
**characterised in that**
(d) the scanning means of the LADAR sensor are controllable such that
- in a first scanning cycle a scanning of the objects (88,88A,88B)detected by the passive sensor occurs along a path (114,114A,114B) covering the objects only once and
- in a second scanning cycle an area scanning occurs in limited area regions (118,118B) each region of which contain one object (88,88B) the scanning being carried out over the complete surface of each object (88,88B) and
(e) from the results of the first scanning cycle a choice is made from the objects (88,88B) detected by the passive sensor according to given criteria,_ wherein only such chosen objects are subjected to the area scanning in the second scanning cycle.

2. An image detecting sensor unit according to claim 1, **characterised in that,** the image processing means is equipped with segmenting means for the segmentation of objects in the field of view and the controlling of the scanning means of the LADAR sensor can be effected such that it scans only such segmented objects.

3. An image detecting sensor unit according to claim 1 or 2, **characterised in that,** a common imaging optic (14) is provided for the LADAR sensor and the passive sensor, wherein a beam splitter (16) is provided for the separation of the radiation incident on the passive sensor and the reverse motion radiation of the LADAR sensor.

4. An image detecting sensor unit according to claim 3, **characterised in that,** the beam splitter (16) is a wavelength selecting beam splitter.

5. An image detecting sensor unit according to claim 4, **characterised in that,** the scanning means (30) for the generation of a scanning movement of the laser light beam of the LADAR sensor is arranged in the path of rays, laser side of the beam splitter (16).

6. An image detecting sensor unit according to claim 5, **characterised in that,** a lambda quarter-wave plate 32 and a polarisation beam splitter 36 are provided in the path of rays, laser side of the image scanning system (30) by means of which the fonvard motion laser light beam of the laser is arranged to be recoupled into the path of rays and the reverse motion laser light beam is arranged to be decoupled from the path of rays with little loss to a detector (40).

## Revendications

1. Unité de capteur à détection d'images, comprenant
(a) un capteur passif (22) décomposant un champ de vision en éléments d'image à luminosités différentes et à la suite duquel sont intercalés des moyens de traitement d'images,
(b) un capteur LADAR actif (40) supplémentaire muni d'un laser (50) qui émet un rayon d'exploration et génère des signaux de distance à partir du rayonnement réfléchi dans le champ de vision par des surfaces, et
(c) des moyens d'exploration (30) destinés à explorer un champ de vision LADAR à l'aide du rayon laser et qui sont susceptibles d'être commandés par les moyens de traitement d'images intercalés à la suite du capteur passif de sorte que l'exploration effectuée par le capteur LADAR est limitée à des objets (88) détectés dans le champ de vision par le capteur passif,
**caractérisée par le fait que**
(d) les moyens d'exploration du capteur LADAR sont susceptibles d'être commandés de sorte que
- une exploration des objets détectés (88,88A,88B) par le capteur passif a lieu pendant un premier cycle d'exploration le long d'une trajectoire (114,114A,114B) qui ne balaye qu'une fois les objets et
- une exploration en surface a lieu pendant un second cycle d'exploration sur toute la surface de chaque objet (88,88B) dans des zones de surfaces (118,118B) limitées comprenant chaque fois un objet (88,88B), et
(e) une sélection des objets (88,88B) détectés par le capteur passif est faite à partir des résultats du premier cycle d'exploration d'après des critères prédonnés, uniquement les objects ainsi sélectionnés étant soumis à l'exploration en surface pendant le second cycle d'exploration.

2. Unité de capteur à détection d'images selon la revendication 1, **caractérisée par le fait que** les moyens de traitement d'images sont adaptés en moyens de segmentation destinés à segmenter des objets dans le champ de vision et que la commande des moyens d'exploration du capteur LADAR a lieu de sorte que celui-ci n'explore que de tels objets segmentés.

3. Unité de capteur à détection d'images selon la revendication 1 ou 2, **caractérisée par le fait qu'**un système optique de reproduction (14) commun au capteur LADAR et au capteur passif est prévu, un diviseur de rayons (16) étant prévu afin de séparer les rayons appliqués au capteur passif et les rayons retour du capteur LADAR.

4. Unité de capteur à détection d'images selon la revendication 3, **caractérisée par le fait que** le diviseur de rayons (16) est un diviseur de rayons de sélection de longueur d'onde.

5. Unité de capteur à détection d'images selon la revendication 4, **caractérisée par le fait que** les moyens d'exploration (30) destinés à générer un déplacement d'exploration du faisceau lumineux laser du capteur LADAR sont disposés dans la marche des rayons du côté du laser du diviseur de rayons (16).

6. Unité de capteur à détection d'images selon la revendication 5, **caractérisée par le fait qu'**une plaque quart d'onde (32) et un diviseur de rayons de polarisation (36) sont prévus dans la marche des rayons du côté du laser du système d'exploration d'images (30), diviseur par l'intermédiaire duquel le faisceau lumineux laser aller est susceptible d'être couplé par le laser pour rentrer dans la marche des rayons et le faisceau lumineux laser retour est susceptible d'être découplé de la marche des rayons sans perte pour aller vers un détecteur (40).
